(19) Europäisches Patentamt
European Patent Office
Office européen des brevets

(11) **EP 1 122 528 B1**

(12) **EUROPÄISCHE PATENTSCHRIFT**

(45) Veröffentlichungstag und Bekanntmachung des Hinweises auf die Patenterteilung:
**20.01.2010 Patentblatt 2010/03**

(51) Int Cl.:
***G01L 1/24*** *(2006.01)*

(21) Anmeldenummer: **01101332.3**

(22) Anmeldetag: **22.01.2001**

(54) **Anordnung und Verfahren zur Erfassung von Dehnungen und Temperaturen und deren Veränderungen einer auf einem Träger applizierten Deckschicht**

Arrangement and method for determining dilatations and temperature and variations thereof of a covering layer applied on a support

Arrangement et méthode pour déterminer dilatations et températures et ses variations d'une couche de couverture appliquée sur un support

(84) Benannte Vertragsstaaten:
**AT BE CH CY DE DK ES FI FR GB GR IE IT LI LU MC NL PT SE TR**

(30) Priorität: **02.02.2000 DE 10004384**

(43) Veröffentlichungstag der Anmeldung:
**08.08.2001 Patentblatt 2001/32**

(73) Patentinhaber: **Airbus Deutschland GmbH
21129 Hamburg (DE)**

(72) Erfinder:
• **Gleine, Wolfgang, Dr.-Ing.
21255 Kakenstorf (DE)**
• **Trutzel, Michael, Dipl.-Ing.
89134 Blaustein/Ulm (DE)**

(74) Vertreter: **Hansmann, Dierk
Patentanwälte
Hansmann-Klickow-Hansmann
Jessenstrasse 4
22767 Hamburg (DE)**

(56) Entgegenhaltungen:
EP-A- 1 014 123   WO-A-95/24614
WO-A-97/26572   WO-A-98/27446
WO-A-99/50699   WO-A-99/61875
DE-A- 3 142 392   US-A- 5 345 519
US-A- 5 680 489   US-A- 6 018 160

**Beschreibung**

Die Erfindung bezieht sich auf eine Anordnung und ein Verfahren zur Erfassung von Dehnungen und Temperaturen und deren Veränderungen einer auf einem Träger applizierten Deckschicht und ein Verfahren zur Realisierung der Anordnung gemäß den Oberbegriffen nach den Ansprüchen 1 und 5. Mit ihr wird es möglich, mit nur einem Sensor die Dehnung und die Temperatur und deren Veränderungen bestimmter Oberflächenschichtenabschnitte getrennt feststellen und eine vor Umwelteinflüssen geschützte Applizierung durch Oberflächenschichtenintegration von optischen Sensoren umzusetzen.

In bekannten Transportsystemen der Luft- und Raumfahrt und auch des Fahrzeugbaus gewinnt das Überwachen, Beobachten und Regeln von Struktureigenschaften zunehmend an Bedeutung. Vorbilder dafür sind: Systeme zur Ermittlung der Belastungsrealität, sogenannte Lastfolgemeßsysteme (load monitoring), Systeme zur Früherkennung von Strukturschäden (health monitoring), weiter Systeme zur Wartungsunterstützung, beipielsweise an unzugänglichen Stellen oder bekannt kritischen Strukturstellen, und im Allgemeinen "Adaptive Systeme", von denen beispielsweise der adaptive Flügel, der adaptive Rotor, der adaptive Pantograph, das adaptive Fahrwerk, das adaptive Airbag bekannt ist. Diese Systeme tragen in unterschiedlicher Art und Weise zum Kundennutzen bei. Im Falle von Lastfolgemeßsystemen kann der aus den aktuellen Lasten abgeleitete Lebensdauerverbrauch ermittelt werden. Damit wird beispielsweise Flugzeugen eine Verlängerung der Nutzungsdauer ermöglicht, wenn ihr aktuell geflogenes Lastkollektiv unterhalb des Bemessungskollektives liegt, oder umgekehrt die Nutzungsdauer verringert, wenn das Lastkollektiv oberhalb des Bemessungskollektives liegt. Diese Tatsache beachtend wird damit den Betreibern von Flugzeugen ein individuelleres Flottenmanagement und eine Verringerung der Betriebskosten der Flugzeuge ermöglicht. Nähert sich ein Fluggerät oder (allgemein) ein Fahrzeug dem Ende seiner Nutzungsdauer, so wird sich der Inspektionsaufwand signifikant erhöhen. Hier trifft der nächste Fall zu, wonach sich durch Automatisieren des Inspektionsaufwandes die Aufwände und damit die Kosten verringern lassen. Bauteile, die ursprünglich schadensfrei ausgelegt waren, können nun ohne Sicherheitseinbuße(n) schadenstolerant betrieben werden, was sich wiederum in einer Verlängerung der Nutzungsdauer und damit der Verringerung in Kosten ausdrücken wird. Ferner tragen adaptive Systeme in erster Linie durch die ihnen eigenen Anpassungsmöglichkeiten zur Steigerung von Flug- oder Fahreigenschaften bei, wodurch sich je nach konkreter Anwendung eine Reduktion des Treibstoffverbrauchs, eine Lärmminderung, Sicherheits- oder auch der Geschwindigkeitssteigerungen erzielen lassen.

Allen diesen Systemen ist gemeinsam, daß hierzu eine sehr robuste und zuverlässige Sensorik notwendig ist, die maximale Performance bei minimalem Hardwareaufwand gewährleistet. Als naheliegende meßtechnische Größe bietet sich insbesondere die Dehnung an, die gegenwärtig vor allem mit elektrischen Dehnungsmeßstreifen (DMS) bestimmt wird.

Die Dehnung kann aber auch mit allen Arten von piezoelektrischer oder faseroptischer Sensorik gemessen werden.

Außerdem sind der Fachwelt eine Vielzahl von Konzepten bekannt, nach denen man mit (applizierten) optischen Fasern die Dehnung und die Temperatur messen kann. Dabei bedient sich der Fachmann einem (der Fachwelt geläufigen) Wissensstand, wonach für die Ausbreitungskonstante $\beta$ einer Lichtwelle in einer optischen Faser die Beziehung: "$\beta = n*L$" gilt, wobei "$n$" für den Brechungsindex der Lichtwelle (der sogenannte Modenindex) und "$L$" für die Länge (Meßlänge) der Faser steht. Nahezu alle bekannten Meßkonzepte zur Dehnungs- und Temperaturmessung beruhen nun darauf, daß "$n$" und "$L$" durch Dehnungs- und Temperaturänderungen geändert werden. Hieraus resultiert auch das grundsätzliche Problem einer Dehnungs- und Temperaturmessung mit faseroptischen Sensoren (mit jeder Art von Struktursensorik), nämlich das Dehnung und Temperatur grundsätzlich meßtechnisch zugängliche Größen beeinflussen.

In der EP 0 753 130 B1 wird, auf den Fall von in faserverstärktem Verbundmaterial integrierten faseroptischen Bragg-Gitter-Sensoren (FBGS) bezogen, darüber informiert, daß eine separate Bestimmung von Dehnung und Temperatur mit Hilfe der beiden Polarisations-Bragg-Resonanzen möglich ist, wobei die beiden Polarisations-Bragg-Resonanzen dadurch entstehen, daß die strukturintegrierte Faser doppelbrechend wird, wobei die Doppelbrechung selbst temperaturabhängig ist. Der Effekt scheint nach den dortigen Angaben so stark entwickelt, daß man für ein Bragg-Gitter zwei Reflexionsstellen erhält. Der Abstand der Peaks (=Differenz der Bragg-Wellenlängen der Polarisations-Bragg-Resonanzen) wird (nach dieser Lösung) dann als ein Maß für die Temperatur und die Bragg-Wellenlänge eines jeden Peaks als ein Maß für die Dehnung und die Temperatur angesehen. Danach wäre eine rechnerische Bestimmung von Dehnung und Temperatur möglich.

Dieser Lösung haftet allerdings der Nachteil an, daß diese Angaben wahrscheinlich nur bei in Faserverbundstrukturen integrierten FBGS eintreffen werden, bei denen zudem die optische Faser im Idealfall senkrecht zu den Werkstofffasern benachbarter Schichten orientiert sein muß. Diese Tatsache hat unter Umständen deutliche (negative) Auswirkungen auf die mechanischen Kennwerte der Struktur, die der Fachmann nicht akzeptieren wird.

Außerdem wird mit erwähnt, daß mit der DE 31 42 392 C2 ein Anordnung für einen Rißsensor und eine Ausführung zu seiner Realisierung bekannt ist. Auf die Anordnung wird nur soweit eingegangen, daß dabei ebenfalls optische Fasern auf einer Trägeroberfläche innerhalb einem Anstrichstoff integriert sind. Druckschriftlich wird auf die trägerlokale Auflage der nicht doppelbrechenden Fasern hingewiesen, dabei (wegen sich unterscheidender Zielstellung) auch kein Hinweis auf die Ver-wendung eines faseroptischen Bragg-Gitters gegeben, weil diese Anordnung auch nur auf das Feststellen von Rissen einer Oberflächenschicht (durch irreversibles Zerreißen der Faser) abzielt.

Bei der Umsetzung der Anordnung begnügt man sich mit einem lochnahen Fixieren der einzelnen Faser auf einem folienartigen Trägerelement. Letzteres wird zwar mit den adhäsiv befestigten Fasern auch auf einer (später anstrichbehafteten) Trägeroberfläche, auf der die Fasern zunächst vor Einlagerung in den (auf Rißwirkung zu beobachtenden) Anstrichauftrag positioniert, jedoch wird, wegen bezweifelter Genauigkeit der beim Heftvorgang mit Farbe auf dem Träger punktuell genau zu fixierenden Faser, eine Fixierung der einzelnen Fasern ohne unvermeidbare Folienhaftung auf dem Träger nicht ausbleiben. Damit läßt sich ein Abziehen der Folie ohne verbleibende Resthaftung auf dem Träger wohl kaum ausschließen. Auch scheint die als Hilfseinrichtung eingesetzte Anordnung zum Fixieren der Fasern an der perforierten Folie zu aufwendig und entsprechend störanfällig.

Demzufolge liegt der Erfindung die Aufgabe zugrunde, eine Anordnung zur Erfassung von Dehnungen und Temperaturen und deren Veränderungen einer auf einem Träger applizierten Deckschicht und ein Verfahren zur Realisierung der Anordnung vorzuschlagen, mit der faseroptische Sensoren zuverlässig und vor Umgebungseinflüssen geschützt auf Strukturen appliziert werden. Außerdem soll sich mit ihr ohne besonderen Aufwand die Strukturdehnung und die Strukturtemperatur (Oberflächentemperatur) der applizierten Deckschicht bestimmen lassen.

Diese Aufgabe wird durch die in den Ansprüchen 1 und 5 angegebenen Maßnahmen gelöst. In den weiteren Ansprüchen sind zweckmäßige Ausgestaltungen dieser Maßnahmen angegeben.

Die Erfindung ist in einem Ausführungsbeispiel anhand der beigefügten Zeichnung näher beschrieben. Dazu zeigt die

Fig. 1 eine Anordnung zur Erfassung von Dehnungen und Temperaturen und deren Veränderungen einer auf einem Träger applizierten Deckschicht;

Fig. 2 das Spektrum eines in Lack oberflächenintegrierten faseroptischen Bragg-Gitter-Sensors (FBG-Sensors) bei -40°C und +25°C.

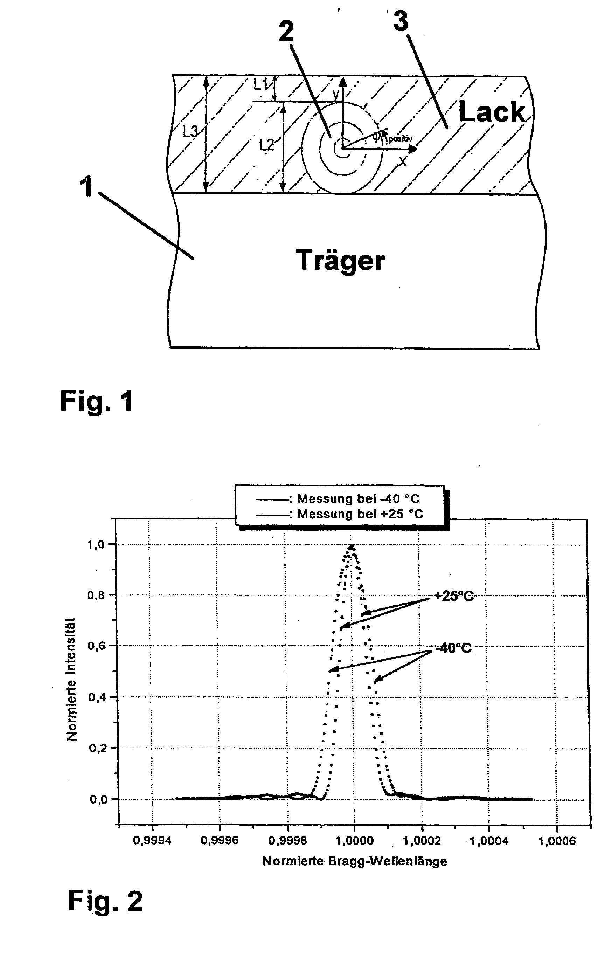

Nach der Fig. 1 besteht die Anordnung aus einem Träger 1 aus Metall, Kunststoff oder Keramik, beispielsweise aus Aluminium, CFK, GFK, Kevlar oder aber auch aus einem auf Kevlarbasis basierenden Material, ect., einer (oder mehrerer) auf dem Träger 1 nach dem später erläuterten Verfahren applizierten Lichtleitfaser 2, die auch (allgemein) als "optische Faser" oder (im besonderen) als "Lichtwellenleiter" bezeichnet wird, und einer (dem Träger 1 als Oberflächenschutz aufgetragene) Deckschicht 3, für die beispielgemäß ein Lack (als Trägeranstrichstoff) verwendet wird. Die Deckschicht 3 kann die Lichtleitfaser(n) 1 vollständig oder teilweise umgeben. Das vollständige Umgeben wird erreicht, wenn die Beziehung: Dicke der Deckschicht L3 größer dem Lichtleitfaser-Außendurchmesser L2 (L3 > L2) eingehalten wird und ein (der Trägeroberfläche) lotrechter Differenzabstand L1 zwischen der Deckschichtoberfläche und der Lichtleitfaser 2 umgesetzt wird. Ein teilweise Umgeben wird erreicht, wenn die Beziehung: Dicke der Deckschicht L3 kleiner dem Lichtleitfaser-Außendurchmesser L2 (L3 < L2) eingehalten wird. In beiden Fällen wird man ein Einbetten der Lichtleitfaser 2 in die Deckschicht 3 feststellen. Die Darstellung der Fig. 1 bezieht sich auf die von der Deckschicht 3 vollständig umgebene Lichtleitfaser 2. Als Lichtleitfaser 2 kommen gewöhnliche Glasfasern in Betracht, die beispielsweise im Telekommunikationsbereich (des Unternehmens "Telekom") eingesetzt werden, oder auch Spezialformen, wie beispielsweise verschiedene Arten von polarisationserhaltenden Fasern (Panda-Typ, elliptischer Kern ect.), auch Doppel- und Mehrfachkernfasern oder auch sogenannte Side-Hole-Fibers. Diese Spezialformen können hilfreich sein, um den verfahrensabzielenden Meßeffekt zu verstärken. Die Anordnung nach der Fig. 1 bezieht sich auf die Verwendung einer Standardtelekomfaser, die aus einem Faserkern, Fasermantel und einer Faserbeschichtung, die auch entfallen kann, besteht. Der auf dem Träger 1 positionierte optische Sensor wird durch die gesamte (auf der Trägeroberfläche positionierte) Lichtleitfaser 2 (genauer: lackeingebettete Lichtleitfaserlänge) gebildet oder auch nur aus einem bestimmten Abschnitt dieser (lackeingebetteten) Lichtleitfaser 2. Es ist weiterhin möglich, diesen bestimmten Abschnitt der Lichtleitfaser 2 geeignet zu sensibilisieren, um - wie gesagt - eine höhere Meßempfindlichkeit hinsichtlich der gewünschten Meßgröße (Dehnung und Temperatur) zu erhalten oder um die Meßtechnik zu vereinfachen. Die Sensiblisierung kann beispielsweise durch Einbringung von reflektierenden Stellen in den Faserabschnitt erfolgen. Ein besonders vorteilhaftes Verfahren zur Einbringung reflektierender Stellen ist das bekannte Einbelichten oder Einätzen von faseroptischen Bragg-Gittern.

Zurückkommend auf die Anordnung nach Fig. 1 wird ferner darauf eingegangen, daß der Sensor mit wenigstens einer Lichtleitfaser 2 realisiert ist. Letztere ist der Oberfläche des erwähnten Trägers 1 aufliegend positioniert und ist in die genannte Deckschicht 3 eingebettet, dabei vollständig oder teilweise von der Deckschicht umgeben.

Weitere Ausgestaltungen dieser derart umgesetzten Maßnahme sehen vor, daß die Lichtleitfaser 2 mit einem (wie angedeutet) aus Glasfaser bestehenden optischen Licht(wellen)leiter, der anliegend der Oberfläche des bspw. aus Aluminium oder CFK bestehenden Trägers 1 oder ihr beabstandet geführt ist und der zumindestens abschnittsweise fest in der auf der Oberfläche haftenden und aus Lack bestehenden Deckschicht geführt ist, realisiert ist. Aus den erwähnten Gründen kann vorge-sehen werden, daß eine Lichtleitfaser 2 eingesetzt wird, die eine polarisationserhaltende Faser, bspw. vom Panda-Typ oder mit einem elliptischen Kem, ist. Dabei kann eine Lichtleitfaser 2, die eine Doppel- oder Mehrfachkernfaser oder auch eine sogenannte Side-Hole-Fibers ist, durchaus Ver-wendung finden. Bei der Umsetzung der Anordnung wird beachtet, daß die Dicke der Deckschicht L3 größer dem Lichtleitfaser- Außendurchmesser L2 ist, wobei die horizontal der Trägeroberfläche angeordnete Lichtleitfaser 2 im Differenzabstand L1 des Lichtleitfaser-Außenmantels zur Deck-schichtoberfläche geführt ist. Der trägerpositionierte Sensor wird durch die Gesamtlänge oder davon mindestens einem Teilabschnitt der Lichtleitfaser 2 bestimmt, wobei letztere mit in den Faserab-schnitt eingebrachten reflektierenden Stellen sensibilisiert ist. Diese reflektierenden Stellen sind vorzugsweise mit faseroptischen Bragg-Gittern realisiert. Die Lichtleitfaser 2 ist mit einer gewöhnlichen Standardtelekommfaser, die einen Faserkern, einen Fasermantel und eine Faserbeschichtung aufweist, realisiert, wobei eine ohne Faserbeschichtung verwendete Lichtleitfaser keinesfalls zu Einschränkungen bei der Erfassung von Dehnungen und Temperaturen oder deren Veränderungen der auf dem Träger 1 applizierten Deckschicht 3 führt.

Eine weitere Ausgestaltung besteht abschließend darin, wonach der faseroptische Sensor mit - wie angedeutet - mehreren applizierten Lichtleitfasern 2 realisiert ist. Dabei sind wenigstens einer Haupt-Lichtleitfaser weitere Neben-Lichtleitfasern verbunden, die auf der Trägeroberfläche verästelt oder verzweigt angeordnet sind und ein flächendek-kendes Lichtleitfasergebilde bilden. Mit einer derartigen Umsetzung dieser Maßnahme wäre es möglich, flächendeckend der Trägeroberfläche eine lokale meßtechnische Erfassung der Dehnung und der Oberflächentemperatur der auf dem Träger 1 applizierten Deckschicht 3 zu realisieren.

Im weiteren wird auf das Integrationsverfahren, also auf die verfahrensmäßige Umsetzung zur Realisierung der Anordnung nach der Fig. 1 näher eingegangen.

Bei der Integration der Lichtleitfaser(n) 2 [optische(n) Faser(n)] in die zu applizierende Deckschicht 3 (in den als Oberflächenschutz eingesetzten Lack) von Strukturbauteilen auf der Strukturoberfläche (Oberfläche des Trägers 1) wird besondere Aufmerksamkeit gefordert, weil reproduzierbar über den gesamten Integrationsbereich zwischen der Lichtleitfaser 2 und der Trägeroberfläche eine kraftschlüssige Verbindung zu gewährleisten ist. Nur dadurch kann eine Strukturdehnung (Dehnung der Deckschicht 3) eindeutig auf die Sensorfaser (Lichtleitfaser 2) übertragen werden. Andererseits sollte der erforderliche Arbeitsaufwand so gering wie möglich gehalten werden und somit weitestgehend maschinell unterstützt werden können. Diese Anforderungen lassen sich durch die nachfolgend erläuterte Applikationstechnik erfüllen.

Vorbereitende Maßnahmen des Integrationsverfahrens werden mit einer sogenannten "Linearen Applikation" und einer sogenannten "Flächigen Applikation" umgesetzt. Dieser Vorbereitung folgt eine sogenannte "Oberflächen-Applikation", mit der das Integrationsverfahren abschließen wird.

Bei der linearen Applikation werden nachfolgende Schritte umgesetzt. Da die Handhabung der (allgemein bezeichneten) Fasern durch ihren geringen Durchmesser und ihre hohe Flexibilität ohne zusätzlich Maßnahmen außerordentlich schwierig ist, wird man einem als Klebstreifen ausgebildeten Klebträger einsetzen, der zunächst in seiner Längsrichtung periodisch gelocht wird. Dieser mit mehreren ausgestanzten Löchern versehene Klebstreifen, den man als vorgefertigtes Zulieferteil benutzen wird, besitzt einseitig eine Klebseite. Die Lichtleitfaser 2 (optische Faser) wird zunächst dermaßen auf die Klebseite aufgebracht, daß sie in der Mitte über der Lochreihe fixiert ist. Bei diesem Präparationsschritt wird eine Lichtleitfaser-Fixiervorrichtung eingesetzt, bei der ausgehend von einer Lichtleitfaser-Spule und einer Klebstreifen-Spule über eine (der Lichtleitfaser-Fixiervor-richtung integrierte) Führungsvorrichtung die spulenabgerollte Lichtleitfaser und der spulenabgerollte Klebestreifen im ausgerollten Zustand definiert zusammengeführt werden und anschließend auf eine Aufnahmespule aufgewickelt werden. Von da aus wird dann - mit den Maßnahmen der (später erläuterten) Oberflächen-Applikation - die klebstreifenhaftende Lichtleitfaser auf der Oberfläche des Trägers 1 positioniert.

Es wird erwähnt, daß man grundsätzlich auch einen Klebstreifen mit mehreren parallelen Lochreihen verwenden kann, der gleichermaßen von der nehmlichen Klebstreifen-Spule der Lichtleitfaser-Fixiervorrichtung aufgenommen wird. Die definierte Zusammenführung von mehreren auf verschiedenen Lichtleitfaser-Spulen einzeln aufgewickelten Lichtleitfasern, die sich dann als einzelne Lichtleitfaser 2 in der Mitte über den Lochdurchmesser des einzelnen ausgestanzten Loches der betreffenden parallelen Lochreihe führen und auf der Klebseite des Klebstreifens fixieren läßt, wird nach dem Vorbild der vorgeschilderten Maßnahme vorgenommen. Dabei werden gleichzeitig mehrere Lichtleitfasern 2 auf diesem Klebstreifen adhäsiv befestigt, die danach von der (auf die Streifenbreite diese Klebstreifens angepaßten) Aufnahmespule aufgewickelt wird.

Die Positionierung der parallelen klebebefestigten Lichtleitfasern auf der Trägeroberfläche wird - mit den Maßnahmen der (später erläuterten) Oberflächen-Applikation - gleichermaßen dem vorgeschilderten Vorbild geschehen.

Es wird erwähnt, daß die Klebseite des Klebstreifens eine wohldefinierte Klebkraft aufweisen wird, wobei bei der Entfernung des Klebstreifens von der (den) Lichtleitfaser(n) repektive von der Oberfläche des Trägers 1, worauf hinsichtlich der Oberflächen-Applikation noch eingegangen wird, keine Klebstoffreste auf der Trägeroberfläche verbleiben dürfen.

Bei der flächigen Applikation wird ein als Klebfolie ausgebildeter Klebeträger (anstelle des Klebestreifens bei der linearen Applikation) eingesetzt, der einseitig auch über eine Klebeseite verfügt. Der spätere Verlauf der Lichtleitfaser(n) 2 wird durch eine Kette periodisch ausgestanzter Löcher vorgegeben, deren geometrische Linienführung nahezu beliebig ist. Dabei wird auf die minimalen Krümmungsradien der zu verwendenden Lichtleitfasern 2 zu achten sein. Die Löcher werden entweder manuell oder mit einem rechnergestützten Stanzautomaten, der verschiedene Lochpositionen anfahren kann, eingebracht. Das Aufbringen der Lichtleitfaser(n) 2 auf die Klebseite der Folie geschieht entweder manuell oder ebenfalls mit einem rechnergestützten Automaten, der von einer Lichtleitfaser-Spule mit einer steuerbaren Führungseinrichtung die (einzelne) Lichtleitfaser 2 und die Klebefolie in Richtung der Lochkette definiert zusammenführt. Die Klebekrafteigenschaften der Klebseite der eingesetzten Klebefolie korrelieren mit denen des (bei der linearen Applikation eingesetzten) Klebestreifens.

Sind die vorbereitenden Maßnahmen des Integrationsverfahrens abgeschlossen, wird darauffolgend die Oberflächen-Applikation des Integrationsverfahrens sich anschließen. Bei der Oberflächen-Applikation werden nachfolgende Schritte umgesetzt. Wie vorher angedeutet - wird zunächst (werden) die [nach der linearen oder der flächigen Applikation adhäsiv befestigten] klebstreifen- oder klebfolienhaftenden Lichtleitfaser(n) 2 der (betreffenden) Aufnahmespule (gestrafft) entrollt und dann auf der Oberfläche des Trägers 1 positioniert. Dabei wird (werden) die auf der Klebseite am Klebestreifen bzw. an der Klebefolie (allg. Klebeträger) haftenden Lichtleitfaser(n) 2 mit Hilfe derer auf der Oberfläche des Trägers 1 der zu überwachenden Anordnung nach der Fig. 1 fixiert und mit einer Deckschicht 3, beispielgemäß mit einer speziellen Grundierfarbe, die durch die Löcher im Klebträger (Klebstreifen oder Klebfolie) dringen wird, punktuell an die Trägeroberfläche geheftet. Nach dem Aushärten der Farbe wird der Klebeträger durch Abziehen von den Lichtleitfasern 2 entfernt. Dann wird (werden) die auf der Trägeroberfläche so positionierten Lichtleitfaser(n) mit einer der Trägeroberfläche flächig aufgetragenen weiteren Deckschicht 3 (einem zweiten Farbauftrag) oder- falls notwendig -darauffolgenden weiteren Deckschichten 3 (Farbaufträgen) endgültig auf der Oberfläche des Träger 1 befestigt.

Bei der Realisierung dieser Maßnahme ist besonders auf die Klebkraft des Klebeträgers zu achten. Die auf der Klebseite entfaltete Haftkraft des Klebeträgers muß gerade so groß sein, daß die Lichtleitfaser(n) 2 relativ sicher zu den Löchern fixiert wird, und sie muß wiederum so gering sein, daß beim Abziehen des Klebeträgers (des Klebstreifens oder der Klebefolie) die punktuell mit einem Anstrichmittel (mit Grundierfarbe) fixierte(n) Lichtleitfaser(n) 2 nicht gleichfalls mit abgezogen werden. Die Trägeroberfläche muß dabei nicht notwendigerweise plan sein. Allerdings dürfen Krümmungen der Trägeroberfläche nicht kleinere Krümmungsradien aufweisen, als es der Mindest-krümmungsradius der Sensorfaser zuläßt.

Die Schritte des vorgestellten Verfahren zur Realisierung der Anordnung nach Fig. 1 lassen sich allgemein folgendermaßen zusammenfassen.

Zunächst werden einem mit einer Klebseite einseitig versehenen Klebträger mehrere Löchern ausgenommen. Danach wird wenigstens eine Lichtleitfaser 2 (werden eine oder mehrere Lichtleitfasern 2) auf der Klebseite des Klebeträgers adhäsiv befestigt (also angeklebt), die dabei dermaßen auf dem Klebeträger fixiert wird (werden), wonach die einzelne Lichtleitfaser 2 ohne Überschreitung von deren zulässigen Krümmungsradius im Abstand der verschiedenen Lochpositionen der Klebeträgeroberfläche angeklebt wird und dabei lochmittig über den Lochdurchmesser des einzelnen Loches geführt wird. Dann wird (werden) die dem Klebeträger anhaftende(n) Lichtleitfaser(n) 2 auf der Trägeroberfläche positioniert und daraufhin mit einem oberflächenbindenden Anstrichmittel (einer Grundierfarbe), das (die) durch die Löcher bis auf die Trägeroberfläche dringen wird, an der Trägeroberfläche des Trägers (nach Fig. 1) punktuell geheftet. Anschließend wird die Klebseite des Klebeträgers nach dem Aushärten des Anstrichmittels (der Farbe) von der (den) Lichtleitfaser(n) 2 abgezogen. Abschließend wird (werden) die geheftete(n) Lichtleitfaser(n) 2 von mindestens einem auf die Oberfläche des Trägers 1 flächenmäßig aufgetragenen weiteren Anstrichmittelauftrag (Farbauftrag), in den sie eingebettet wird (werden), vollständig oder teilweise überzogen, nach dessen Aushärtung die Lichtleitfaser(n) 2 auf der Trägeroberfläche endgültig befestigt wird (werden).

Um ein weiteres Verfahren zur Erfassung von Dehnungen und Temperaturen und deren Veränderungen einer auf einem Träger 1 applizierten Deckschicht 3, bei dem wenigstens ein auf dem Träger 1 positionierter optischen Sensor benutzt wird, vorzustellen, werden (zum besseren Verständnis) nachfolgend geschilderte Gedanken vorangestellt.

Anknüpfend an den Gedanken, wonach es bekannt ist, im Zusammenhang mit optischen Fasern die Dehnung und die Temperatur (nach einer Vielzahl von Konzepten) zu messen, dabei für die Ausbreitungskonstante $\beta$ einer Lichtwelle in der Faser (eben) die bekannte Beziehung: "$\beta=n*L$" beachtet wird, und unter Beachtung, daß nahezu alle bekannten Meßkonzepte zur Dehnungs- und Temperaturmessung darauf beruhen, wird darauf basierend mit folgendem Gedanken fortgesetzt, daß n und L durch Dehnung und Temperaturänderungen geändert werden. Geht man (der Einfachheit halber) ferner davon aus, daß die elektromagnetische Welle in einer Einmoden-Faser mit einer ebenen Welle (als gute Näherung für schwach führende Fasern) beschrieben werden kann, die sich - auf die Fig. 1 bezogen - in z-Richtung ausbreiten wird, dann wird der Brechungsindex für jede Schwingungsrichtung in der x-y-Richtung der Welle (auf die Fig. 1 bezogen) identisch sein, falls keine Doppelbrechung in der Faser vorliegt.

An dieses Wissen knüpft nun die nachfolgend vorgestellte Lösung für ein Verfahren zur Erfassung von Dehnungen und Temperaturveränderungen einer auf einem Träger 1 applizierten Deckschicht 3 an. Um mit einer als (faseroptischer) Sensor ausgebildeten optischen Faser, die (wie vorangestellt) weiter mit Lichtleitfaser 2 bezeichnet wird, die Dehnung und die Temperatur innerhalb einer Deckschicht 3 (von beispielsweise eines Lack bzw. lackähnlichen Auftrages oder Anstriches) zu messen und zu trennen, wobei die Deckschicht 3 nach dem Vorbild der Fig. 1 auf der Oberfläche eines Trägers 1 positioniert und vollständig der auf dem Träger 1 applizierten Deckschicht 3 eingebettet ist, wird davon ausgegangen, daß durch geeignete Materialauswahl (sowohl für den Träger 1, als auch für die Lichtleitfaser 2 und auch für die Deckschicht 3) eine temperaturabhängige Doppelbrechung in der Lichtleitfaser 2 erzeugt werden wird. Der Verwirklichung diese Zieles kommt man derweise näher, wenn man ferner bedenkt, daß das (bestimmten Einflüssen ausgesetzte) Deckmaterial der Deckschicht 3 mechanische Spannungen im Faserkern und Fasermantel der Lichtleitfaser 2 erzeugen wird, die einerseits temperaturabhängig sind und andererseits nicht zirkularsymmetrisch auf die Lichtleitfaser 2 wirken. Diese Vorstellung wird durch die vorbeschriebene Art und Weise der Applizierung (basierend auf der Fig. 1) umgesetzt, weil die Lichtleitfaser - weitest-gehend direkt - auf einem Träger 1 liegt, der aus einem vom Material der Faser sich (deutlich) unter-scheidenden Material besteht und auch das Deckmaterial sich (deutlich) von Faser und Träger-material unterscheidet. Weitestgehend deshalb, weil durch die (vorher beschriebene) punktuelle Fixierung der Lichtleitfaser 2 mit einem durch die Löcher des Klebträgers laufenden Anstrichstoff letzerer ungünstigenfalls auch unter die (eigentlich unmittelbar auf der Oberfläche des Trägers 1) zu fixierende Lichtleitfaser 2 verlaufen und diese mit (etwas) von der Trägeroberfläche abheben kann.

Das bedeutet, je nach Schwingungsrichtung (in x-y-Ebene) der elektromagnetischen Welle (des fasereingekoppelten Lichtes) "sieht" diese einen anderen Brechungsindex. Meßbar ist dies grundsätzlich mit bekannten interferometrischen oder polarimetrischen Verfahren.

Besonders einfach werden die Verhältnisse, falls ein Bragg-Gitter als Sensorelement in den entsprechenden Faserabschnitt der Lichtleitfaser 2 eingebracht wird. Dabei erzeugt das Bragg-Gitter in einer nicht-doppelbrechenden Faser eine Resonanz um die sogenannte Bragg-Wellenlänge $\lambda_B$ herum. Diese Resonanz findet sich in der Beziehung: "$\lambda_B = 2 \cdot n \cdot \Lambda$" wieder, wobei "n" für die mittlere effektive Brechzahl und "$\Lambda$" für die Gitterperiode stehen.

Sofern nun die Faser doppelbrechend wird, erhält man je nach Schwingungsrichtung der Welle eine andere Bragg-Wellenlänge. Dieser Effekt wird nun, wie einleitend angegeben, ausführlich in der gewürdigten EP-0 753 130 B1 für den Fall von in faserverstärkten Verbundmaterialien integrierten faserverstärkten Bragg-Gitter-Sensoren (FBGS) behandelt.

Im weiteren werden - auf das noch eingehender zu erläuternde Verfahren (zur Erfassung von Dehnungen und Temperaturveränderungen einer auf einem Träger applizierten Deckschicht) bezogen - weitere allgemeine Ausführungen hinsichtlich der Dehnungs- und Temperatur-empfindlichkeit von Bragg-Gitter-Sensoren gegeben, die dem weiteren (nötigen) Verständnis zweckdienlich sind.

Faseroptische Bragg-Gitter-Sensoren werden durch ihre Periode , durch die Amplitude der permanenten, periodischen oder auch quasi periodischen Brechzahlmodulation und durch die Länge der Brechzahlmodulation (Gitterlänge) charakterisiert. Durch die bei der Herstellung der Sensoren festzulegende Gitterperiode wird der spektrale Bereich festgelegt, in dem der Sensor das in der optischen Faser geführte Licht reflektieren kann. Die Amplitude der Brechzahlmodulation und die Gitterlänge bestimmen dabei die konkreten Eigenschaften des Gitterspektrums, von denen die maximale Reflektivität und die Halbwertsbreite (FWHM) des Spektrums erwähnt wird. Die Wellenlänge des Maximums wird als Bragg-Wellenlänge $\lambda_B$ bezeichnet und ergibt sich aus dem Produkt der Gitterperiode $\Lambda_0$ und der mittleren effektiven Brechzahl im Gitterbereich $n_0$, wonach folgende Beziehung:

$$\lambda_{B0} = 2 \cdot n_0 \cdot \Lambda_0 \qquad (1)$$

gilt. Beide Größen können polarisationsabhängig sein, wodurch auch die Bragg-Wellenlänge polarisationsabhängig wird; dieses wird nachfolgend mit "$\lambda_{B\,p/q}$" bezeichnet, dabei "p" bzw. "q" für die beiden möglichen Polarisationsachsen der optischen Faser stehen. Der Index "0" bezieht sich auf den ungedehnten Zustand des Sensors bei einer festen Temperatur.

Ein faseroptisches Bragg-Gitter (FBG) läßt sich als Dehnungs- und / oder Temperatursensor verwenden, da sowohl der Brechungsindex $n_0$ als auch die Gitterperiode $\Lambda_0$ Funktionen des Dehnungstensors und der Temperatur sind und damit über die Beziehung (1) auch die Bragg-Wellenlänge $\lambda_B$ sich verändern wird, sofern äußere Kräfte auf das Bragg-Gitter wirken. In erster Näherung wird man dann von folgender Beziehung:

$$\Delta\lambda_B/\lambda_{B0} = \Delta\Lambda(\varepsilon_i)/\Lambda_0 + \Delta n(\varepsilon_i, \Delta T)/n_0 \qquad \text{mit } i=1, 2, ..., 6 \qquad (2)$$

ausgehen. Die Angabe "$\varepsilon_i$" steht für 6 (sechs) Dehnungskomponenten (mechanische und thermische Dehnungen) in reduzierter Schreibweise und die Angabe "$\Delta T$" steht für eine Temperaturänderung.

Für die Änderung der geometrischen und optischen Eigenschaften des Sensors als Funktion der Dehnungskomponenten und der Temperatur wird einem (der Fachwelt bekannten) Modell nach Kim et al. gefolgt. Die Faserachse wird dabei in die $x_1$-Richtung eines rechtwinkligen Koordinatensystems gelegt. Für einen optisch isotropen Sensor ergeben sich die Änderungen zu:

$$\Delta\Lambda(\varepsilon_i)= \Lambda_0*\varepsilon_i \qquad \text{und}$$

$$\Delta n_{p/q}(\varepsilon_i,\Delta T)=-n_0^3/2*\{p_{12}*\varepsilon_1+[(p_{11}+ p_{12})*1/2]*(\varepsilon_2+\varepsilon_3)\pm[(p_{11}-p_{12})*1/2]*\gamma_{max}-[2/n_0^3*dn_0/dT+(2* p_{12}+ p_{11})*\alpha]*\Delta T\} \qquad (3)$$

Die Angaben "$p_{11}+ p_{12}$" sind die photoelastischen Konstanten der optischen Faser, "$\alpha$" bezeichnet den linearen thermischen Ausdehnungskoeffizienten der optischen Faser und "$\gamma_{max}$" ist definiert als die maximale Scherdehnung in der Ebene senkrecht zur Faserachse, wobei die Beziehung:

$$\gamma_{max}=[(\varepsilon_2-\varepsilon_3)^2+\varepsilon_4^2]^{1/2} \qquad (4)$$

gilt. Für einen uniaxialen thermomechanischen Spannungsfall in Richtung der Faserachse möge gelten: "$\varepsilon_1\neq0$; $\varepsilon_2=\varepsilon_3=-\upsilon*\varepsilon_1+(1+\upsilon)*\alpha*\Delta T$" und "$\varepsilon_4=\varepsilon_5=\varepsilon_6=0$", wobei "$\upsilon$" die Querzahl der optischen Faser beschreibt ($\upsilon=0,17$). Danach folgt aus den Beziehungen (Gleichungen) 2, 3 und 4 für die Verschiebung der Bragg-Wellenlänge als Funktion der axialen Dehnung und der Temperaturänderung:

$$\Delta\lambda_B/\lambda_{B0}=[1-p^{eff}]* \varepsilon_1+[\alpha*p^{eff}+1/ n_0*dn/dT]*\Delta T \qquad \text{und} \qquad p^{eff}= 1/2*n_0^2*[ p_{12} -v*(p_{11}+ p_{12})] \qquad (5)$$

mit der sogenannten effektiven photoelastischen Konstante "$p^{eff}$". Die Beziehung 5 wird in der Regel für die Kalibrierung der FBGS verwendet. Man erkennt, daß zwischen der relativen Bragg-Wellenlängen-Verschiebung und der Axialdehnung ein linearer Zusammenhang besteht. Den Wert für die effektive photoelastische Konstante wird bei konstanter Temperatur an einer Reihe unterschiedlicher FBGS zu "$p^{eff}=0,19$ bis $0,23$", abhängig von der konkreten Faserdotierung, bestimmt. Im Rahmen der eingeführten Meßgenauigkeit wird keine Temperaturabhängigkeit dieser Größe im Temperaturbereich zwischen -50° C und 100° C gefunden.

Die thermische Empfindlichkeit der Sensoren hängt ebenfalls von der konkreten Faserdotierung ab und kann darüber hinaus auch von der Faserbeschichtung beeinflußt werden. In guter Näherung erhält man bei Bragg-Wellenlängen um 1,53 $\mu$m eine Verschiebung der Bragg-Wellenlänge von 1,2 pm/($\mu$m/m) mit der Dehnung und zirka 10 pm/K mit der Temperatur.

Aus der Beziehung 5 wird auch das grundsätzliche Problem der Dehnungsmessung mit FBGS klar. Die primäre Meßgröße, (soll heißen) die Bragg-Wellenlänge shiftet als Funktion der Dehnung und der Temperatur. Man kann somit nicht zwischen beiden Effekten unterscheiden.

Schreibt man Beziehung 5 in der Form:

$$\Delta\lambda_B=K_\varepsilon*\varepsilon+ K_T*\Delta T \qquad (6)$$

mit dem Empfindlichkeitsfaktor Dehnung "$K_\varepsilon$" und dem Empfindlichkeitsfaktor Temperatur "$K_T$", so ließe sich das Problem lösen, falls beispielsweise eine zweite Bragg-Wellenlänge mit anderen Empfindlichkeitsfaktoren vorhanden wären.

Die Messung der beiden Bragg-Wellenlängen liefert nun nach der Beziehung:

$$\begin{bmatrix} \Delta\lambda_{B1} \\ \Delta\lambda_{B2} \end{bmatrix} = \begin{bmatrix} K_{\varepsilon1} & K_{T1} \\ K_{\varepsilon2} & K_{T2} \end{bmatrix} * \begin{bmatrix} \varepsilon \\ \Delta T \end{bmatrix} \qquad (7)$$

(mit Inversion der Empfindlichkeitsmatrix) die gesuchten Größen.

Es liegt nun der Gedanke nahe, die Form des Spektrums von einer der beiden Größen, Axialdehnung oder Temperatur, abhängig zu machen, um damit den Effekt dieser Größe aus der Bragg-Wellenlängen-Verschiebung herauszurechnen. Die FWHM stellt dabei ein meßtechnisch einfach zu erfassendes Maß für die "Form des Spektrums" dar.

Zurückkommend nun auf das Verfahren zur Erfassung von Dehnungen und Temperaturen und deren Veränderungen einer aus (beispielsweise hier) einem Lack bestehenden Deckschicht 3, die (nach dem Vorbild der Fig. 1) auf einem Träger 1 appliziert und mit wenigstens einem auf dem Träger 1 positionierten optischen Sensor, der mit einem der Lichtleitfaser 2 einbelichtetem Bragg-Gitter realisiert ist, dabei die Lichtleitfaser 2 aufliegend der Trägeroberfläche positioniert ist, wobei die Lichtleitfaser 2 in die Deckschicht 3 eingebettet und dabei vollständig oder teilweise von der Deckschicht 3 umgeben ist, wird - unter diesen Voraussetzungen - eine Doppelbrechung des der (betreffenden) Lichtleitfaser 2 gekoppelten Lichtes in der Lichtleitfaser 2 induziert werden, die temperaturabhängig ist. Die induzierte Doppelbrechung ist nicht so sehr stark. Dadurch spalten die Spektren nicht auf, sondern sie überlappen sich, weil eben eine Aufspaltung des Bragg-Reflexes in zwei unabhängige Peaks nicht erreicht wird.

Bei Überlappung der beiden Polarisations-Bragg-Resonanzen, im Folgenden Spektren genannt, sind diese nur dann gleichzeitig meßbar, falls das zur Ansteuerung der Sensoren benutzte Licht auch die entsprechenden Polarisationsanteile, die zu einer Reflexion an dem jeweiligen Spektrum führen, enthält. Dies kann durch die Verwendung von vorzugsweise "Quasi-depolarisiertem Licht" erreicht werden, dessen Erzeugung in der Fachwelt bekannt ist. Genau hierbei wird aus den beiden einzelnen, sich überlappenden Spektren, ein Spektrum erzeugt, das als Mittelwert der beiden einzelnen, sich überlappenden Spektren angesehen werden kann. Nimmt man an, daß die beiden Polarisations-Bragg-Resonanzen eine identische Form, jedoch leicht unterschiedliche Bragg-Wellenlängen $\lambda_{Bp}$ und $\lambda_{Bq}$ besitzen, so wird bei der Ansteuerung des Sensors mit "Quasi-depolarisiertem Licht" ein Spektrum gemessen, dessen Bragg-Wellenlänge "$\lambda_{B\,depol}$" aus dem arithmetischen Mittelwert der beiden einzelnen Polarisations-Bragg-Resonanzen $\lambda_{Bp}$ und $\lambda_{Bq}$ nach der Beziehung: "$\lambda_{B\,depol} = 1/2 \cdot (\lambda_{Bp} + \lambda_{Bq})$" folgt. Dies ist solange möglich, solange die Differenz der beiden Polarisations-Bragg-Resonanzen $\lambda_{Bp}$ und $\lambda_{Bq}$ kleiner ist als die volle Halbwertsbreite (FWHM) eines einzelnen Spektrums: $|\lambda_{Bp} - \lambda_{Bq}| <$ FWHM$_{(überlappendes\,Spektrum)}$. Diese Beziehung kann daher auch als Maß für die Aussage "Doppelbrechung ist nicht so stark" angesehen werden.

Nach dieser Lösung wird jetzt durch die Art und Weise der Applizierung des FBG-Sensors erreicht, daß das mit "Quasi-depolarisiertem Licht" gemessene Spektrum, das sich (wie vorher erläutert) aus den Spektren der beiden Polarisations-Bragg-Resonanzen $\lambda_{Bp}$ und $\lambda_{Bq}$ ergibt, seine Form vorzugsweise gemessen mit Hilfe der vollen Halbwertsbreite (FWHM$_{depol.}$) ändert, und zwar vorzugsweise nur als Funktion der Temperatur, das heißt die Bragg-Wellenlänge von diesem Spektrum $\lambda_{B\,depol}$ shiftet nach wie vor als Funktion der Axialdehnung (des Sensors) und der Temperatur (Beziehung 5 und Beziehung 6), da aber die Temperatur mit Hilfe der FWHM$_{depol.}$ bestimmt werden kann, ist somit eine rechnerische Bestimmung der reinen Axialdehnung möglich. Dies wird insbesondere durch die Verwendung nur eines einzigen Sensors erreicht.

Das vorgestellte Verfahren besitzt den Vorteil, das es sich auf jeder Strukturoberfläche anwenden läßt, unter Beachtung dessen, daß die durch das Deckmaterial (hier: ein Oberflächenschutz-Lack) induzierten Dehnungen in der Faser ausreichend groß sind. Dieses kann dadurch erreicht werden, daß die thermischen Ausdehnungskoeffizienten der eingesetzten Materialien sich hinreichend unterscheiden und / oder die Temperaturabhängigkeit des E-Moduls hinreichend unterschiedlich ist.

**Patentansprüche**

1. Anordnung zur Erfassung von Dehnungen und Temperaturen und deren Veränderungen einer auf einem Träger applizierten Deckschicht, mit wenigstens einem auf dem Träger (1) positionierten optischen Sensor, der mit wenigstens einer Lichtleitfaser (2) realisiert ist,
   wobei die Lichtleitfaser (2), die aufliegend der Trägeroberfläche positioniert ist, ein als Sensor benutztes Bragg-Gitter, das innerhalb einem definierten Faserabschnitt der Lichtleitfaser (2) angeordnet ist, fasereinbelichtet oder fasereingeätzt ist, bei der in der Lichtleitfaser (2) durch im Fasermantel und im Faserkern der Lichtleitfaser (2) auftretende nicht zirkular-symmetrische thermomechanische Dehnungen, die von der Deckschicht (3) auf die Lichtleitfaser (2) übertragen werden, eine Doppelbrechung erzeugbar ist, dabei die Lichtleitfaser (2) vollständig oder teilweise von der Deckschicht (3) umgeben letzterer eingebettet ist, wobei zwischen der Deckschicht (3), der Lichtleitfaser (2) und der Trägeroberfläche eine kraftschlüssige Verbindung besteht, **dadurch gekennzeichnet, dass** die Deckschicht aus einem Lack oder lackähnlichern Anstrichstoff besteht und der Träger und die Deckschicht aus anderen Materialien bestehen.

2. Anordnung nach Anspruch 1, **dadurch gekennzeichnet, dass** die Lichtleitfaser (2) ein aus Glasfaser bestehender optischer Lichtleiter, der anliegend der Oberfläche des aus Metall, Kunststoff oder Keramik bestehenden Trägers (1) geführt ist und der zumindest abschnittsweise fest in der auf der Oberfläche haftenden und aus einem Lack oder lackähnlichen Anstrichstoff bestehenden Deckschicht (3) geführt ist.

3. Anordnung nach Anspruch 1, **dadurch gekennzeichnet, dass** die Dicke (L3) der Deckschicht (3) größer dem Lichtleitfaser-Außendurchmesser (L2) ist, wobei die horizontal der Trägeroberfläche angeordnete Lichtleitfaser (2) im Differenzabstand (L1) des Lichtleitfaser-Außenmantels zur Deckschichtoberfläche von Deckschicht (3) umgeben geführt ist, oder die Dicke (L3) der Deckschicht (3) kleiner dem Lichtleitfaser-Außendurchmesser (L2) ist, wobei die horizontal der Trägeroberfläche angeordnete Lichtleitfaser (2) im Differenzabstand (L1) des Lichtleitfaser-Außenmantels zur Deckschichtoberfläche frei von Deckschicht (3) geführt ist, oder die Dicke (L3) der Deckschicht (3) gleich dem Lichtleitfaser-Außendurchmesser (L2) ist, wobei die horizontal der Trägeroberfläche angeordnete Lichtleitfaser (2) ohne bestehenden Differenzabstand (L1) des Lichtleitfaser-Außenmantels zur Deckschichtoberfläche weitestgehend von Deckschicht (3) umgeben geführt ist.

4. Anordnung nach Anspruch 1, **dadurch gekennzeichnet, dass** der faseroptische Sensor mit mehreren applizierten Lichtleitfasern (2) realisiert ist, dabei wenigstens einer Haupt-Lichtleitfaser weitere Neben-Lichtleitfasern verbunden sind, die auf der Trägeroberfläche verästelt oder verzweigt angeordnet sind und ein flächendeckendes Lichtleitfasergebilde bilden.

5. Verfahren zur Erfassung von Dehnungen und Temperaturen und deren Veränderungen einer auf einem Träger applizierten Deckschicht, mit wenigstens einem auf dem Träger (1) positionierten optischen Sensor, **dadurch gekennzeichnet, dass** durch auftretende Temperaturschwankungen der Deckschicht (3), die aus einem Lack oder lackähnlichen Anstrichstoff besteht, der sich von dem Material des Trägers (1) unterscheidet, von dieser temperaturabhängige mechanische Dehnungen nicht zirkularsymmetrisch auf eine Lichtleitfaser (2), die von der Deckschicht (3) umgeben der Trägeroberfläche aufliegt, übertragen werden, dass daraufhin durch die im Fasermantel und im Faserkern der Lichtleitfaser (2) auftretenden mechanischen Dehnungen innerhalb einem als Sensor benutzten fasereinbelichtetem oder fasereingeätztem Bragg-Gitter, das sich innerhalb einem definierten Faserabschnitt der Lichtleitfaser (2) befindet, eine Doppelbrechung in der Lichtleitfaser (2) erzeugt wird, dass durch die Doppelbrechung daraufhin eine Verbreiterung des Spektrums des Bragg-Gitters umgesetzt wird, dass anschließend das Breitenmaß des Spektrums, das ein Maß für vorzugsweise die Temperatur darstellt, meßtechnisch erfasst wird.

## Claims

1. Arrangement for registering expansions and temperatures and changes thereof of a covering layer applied on a substrate, with at least one optical sensor positioned on the substrate (1), which is realised with at least one light-conducting fibre (2), wherein the light-conducting fibre (2), which is positioned resting on the substrate surface, is a Bragg grating used as a sensor, which is arranged within a defined fibre portion of the light-conducting fibre (2) and is fibre-imprinted or fibre-etched, wherein by virtue of non-circularly-symmetrical thermomechanical expansions occurring in the fibre cladding and in the fibre core of the light-conducting fibre (2), which are transmitted from the covering layer (3) to the light-conducting fibre (2), a double refraction is capable of being generated in the light-conducting fibre (2), and the light-conducting fibre (2) is completely or partly surrounded by the covering layer (3), embedded in the latter, wherein a force-closed connection exists between the covering layer (3), the light-conducting fibre (2) and the substrate surface, **characterised in that** the covering layer consists of a lacquer or lacquer-like paint and the substrate and the covering layer consist of different materials.

2. Arrangement according to Claim 1, **characterised in that** the light-conducting fibre (2) is an optical conductor consisting of glass fibre, which is guided adjacent to the surface of the substrate (1) consisting of metal, plastic or ceramic and which, at least intermittently, is firmly guided in the covering layer (3) adhering to the surface and consisting of a lacquer or lacquer-like paint.

3. Arrangement according to Claim 1, **characterised in that** the thickness (L3) of the covering layer (3) is greater than the outside diameter (L2) of the light-conducting fibre, the light-conducting fibre (2) arranged horizontally on the substrate surface being guided with a differential spacing (L1) of the outer cladding of the light-conducting fibre from the surface of the covering layer, surrounded by the covering layer (3), or the thickness (L3) of the covering layer (3) is smaller than the outside diameter (L2) of the light-conducting fibre, the light-conducting fibre (2) arranged horizontally on the substrate surface being guided with a differential spacing (L1) of the outer cladding of the light-conducting fibre from the surface of the covering layer, free from the covering layer (3), or the thickness (L3) of the covering layer (3) is equal to the outside diameter (L2) of the light-conducting fibre, the light-conducting fibre (2) arranged horizontally on the substrate surface being guided without existing differential spacing (L1) of the outer cladding of the light-conducting fibre from the surface of the covering layer, very largely surrounded by the covering layer (3).

4. Arrangement according to Claim 1, **characterised in that** the fibre-optic sensor is realised with several applied light-conducting fibres (2), and further secondary light-conducting fibres which are arranged on the substrate surface in ramified or branched manner and which form a surface-covering light-conducting-fibre structure are connected to at least one principal light-conducting fibre.

5. Process for registering expansions and temperatures and changes thereof of a covering layer applied on a substrate, with at least one optical sensor positioned on the substrate (1), **characterised in that** by virtue of fluctuations arising in the temperature of the covering layer (3), which consists of a lacquer or lacquer-like paint that differs from the material of the substrate (1), temperature-dependent mechanical expansions are transmitted in non-circularly-symmetrical manner from said covering layer to a light-conducting fibre (2) which, surrounded by the covering layer (3), rests on the substrate surface, **in that** thereupon by virtue of the mechanical expansions occurring in the fibre cladding and in the fibre core of the light-conducting fibre (2) within a fibre-imprinted or fibre-etched Bragg grating used as a sensor, which is located within a defined fibre portion of the light-conducting fibre (2), a double refraction is generated in the light-conducting fibre (2), **in that** thereupon by virtue of the double refraction a broadening of the spectrum of the Bragg grating is realised, **in that** subsequently the breadth dimension of the spectrum, which constitutes a measure of, preferentially, the temperature, is registered metrologically.

## Revendications

1. Arrangement pour déterminer des dilatations et des températures d'une couche de couverture appliquée sur un support et leurs variations, comprenant au moins un capteur optique qui est positionné sur le support (1) et est réalisé avec au moins une fibre optique (2), la fibre optique (2), qui est appliquée sur la surface du support, comportant un réseau de Bragg utilisé comme capteur, qui est disposé à l'intérieur d'une portion définie de la fibre optique (2) et est obtenu par photoinscription ou gravure chimique, arrangement dans lequel une double réfraction peut être produite dans la fibre optique (2) par des dilatations thermomécaniques, sans symétrie circulaire, qui apparaissent dans la gaine de fibre et dans le coeur de fibre de la fibre optique (2) et sont transmises par la couche de couverture (3) à la fibre optique (2), et la fibre optique (2) est encastrée dans la couche de couverture (3) en étant entourée totalement ou partiellement par celle-ci, une liaison par adhérence existant entre la couche de couverture (3), la fibre optique (2) et la surface du support, **caractérisé par le fait que** la couche de couverture est constituée d'un vernis ou d'un produit d'enduction semblable à un vernis, et le support et la couche de couverture sont constitués de matériaux différents.

2. Arrangement selon la revendication 1, **caractérisé par le fait que** la fibre optique (2) est un conducteur optique, constitué de fibre de verre, qui est appliqué contre la surface du support (2) réalisé en métal, matière plastique ou céramique, et qui est guidé au moins par portions solidement dans la couche de couverture (3) adhérant à la surface et constituée d'un vernis ou d'un produit d'enduction semblable à un vernis.

3. Arrangement selon la revendication 1, **caractérisé par le fait que** l'épaisseur (L3) de la couche de couverture (3) est supérieure au diamètre extérieur (L2) de la fibre optique, la fibre optique (2), qui est disposée horizontalement par rapport à la surface du support, étant guidée de manière à être entourée par la couche de couverture (3) dans la distance différentielle (L1) séparant la gaine de la fibre optique de la surface de la couche de couverture, ou bien que l'épaisseur (L3) de la couche de couverture (3) est inférieure au diamètre extérieur (L2) de la fibre optique, la fibre optique (2), qui est disposée horizontalement par rapport à la surface du support, étant guidée de manière à être dégagée de la couche de couverture (3) dans la distance différentielle (L1) séparant la gaine de la fibre optique de la surface de la couche de couverture, ou bien que l'épaisseur (L3) de la couche de couverture (3) est égale au diamètre extérieur (L2) de la fibre optique, la fibre optique (2), qui est disposée horizontalement par rapport à la surface du support, étant guidée sans la distance différentielle (L1) entre la gaine de la fibre optique et la surface de la couche de couverture, en étant entourée en majeure partie par la couche de couverture (3).

4. Arrangement selon la revendication 1, **caractérisé par le fait que** le capteur à fibre optique est réalisé avec plusieurs fibres optiques (2) appliquées, en associant à au moins une fibre optique principale des fibres optiques secondaires, qui sont disposées avec des ramifications ou des embranchements sur la surface du support et forment une structure de fibres optiques couvrant une surface.

5. Procédé pour déterminer des dilatations et des températures d'une couche de couverture appliquée sur un support et leurs variations, comprenant au moins un capteur optique qui est positionné sur le support (1), **caractérisé par le fait que** suite à des variations de température de la couche de couverture (3) constituée d'un vernis ou d'un produit d'enduction semblable à un vernis, différent du matériau du support (1), celle-ci transmet des dilatations mécaniques, qui sont fonction de la température, de façon non symétrique circulaire à une fibre optique (2) qui est appliquée sur la surface du support en étant entourée par la couche de couverture (3), **par le fait que** suite à cela, les dilatations mécaniques, qui apparaissent dans la gaine de fibre et dans le coeur de fibre de la fibre optique (2), produisent une double réfraction dans la fibre optique (2), à l'intérieur d'un réseau de Bragg obtenu par photoinscription ou gravure chimique dans la fibre, qui est utilisé en tant que capteur et se situe dans une portion définie de la fibre optique (2), **par le fait que** la double réfraction provoque ensuite un élargissement du spectre du réseau de Bragg, et **par le fait qu'**ensuite la dimension en largeur du spectre, qui représente une mesure, de préférence de la température, est déterminée par des techniques de mesure.

**2** **3**

**Lack**

L1

L3

L2

y

φ positiv

x

**1**

**Träger**

# Fig. 1

————: Messung bei –40 °C
————: Messung bei +25 °C

1,0

0,8

+25°C

Normierte Intensität

0,6

-40°C

0,4

0,2

0,0

0,9994    0,9996    0,9998    1,0000    1,0002    1,0004    1,0006

Normierte Bragg-Wellenlänge

# Fig. 2

**IN DER BESCHREIBUNG AUFGEFÜHRTE DOKUMENTE**

**In der Beschreibung aufgeführte Patentdokumente**

- EP 0753130 B1

- DE 3142392 C2